# EUROPEAN PATENT SPECIFICATION

(11) **EP 3 056 907 B1**
(45) Date of publication and mention of the grant of the patent: **18.03.2020**
(21) Application number: 15154675.1
(22) Date of filing: 11.02.2015
(51) Int. Cl.: G01N 35/00, G01N 35/04, B65B 7/16, B65B 7/28, G01N 35/02

(54) **METHOD AND DEVICE FOR HANDLING TEST TUBES IN A LABORATORY AUTOMATION SYSTEM**
VERFAHREN UND VORRICHTUNG ZUR HANDHABUNG VON REAGENZGLÄSERN IN EINEM LABORAUTOMATISIERUNGSSYSTEM
PROCÉDÉ ET DISPOSITIF POUR MANIPULER DES TUBES DE TEST DANS UN SYSTÈME D'AUTOMATISATION DE LABORATOIRE

(43) Date of publication of application: 17.08.2016
(73) Proprietor: F. Hoffmann-La Roche AG, 4070 Basel (CH); Roche Diagnostics GmbH, 68305 Mannheim (DE)
(72) Inventor: Margner, Lech, 71229 Leonberg (DE)
(74) Representative: Patentanwälte Ruff, Wilhelm, Beier, Dauster & Partner mbB

(56) References cited:
- EP-A1- 1 524 525
- US-A1- 2002 009 391
- US-A1- 2005 260 101

## Description

### TECHNICAL FIELD

The invention relates to method and a device for handling test tubes in a laboratory automation system. The invention further relates to a laboratory automation system.

A laboratory automation system comprises a number of pre-analytical, analytical and/or post-analytical stations, in which samples, for example blood, saliva, swab and other specimens taken from the human body, are processed. It is generally known to provide test tubes containing the samples. The test tubes are also referred to as sample tubes. It is well known to place several test tubes in so-called racks for an efficient handling. During processing or for sorting prior to a further processing, test tubes have to be moved or transferred for example from a first position within a rack to a second position within the same rack or to a different rack and/or from a first station to a second station. Prior to processing, the test tubes are usually capped with a removable plug or stopper. For processing the samples, the test tubes are decapped.

When handling an open test tube, it is known to choose the velocity and/or acceleration of the handling device sufficiently low in order to prevent the sample from sloshing out of the test tube or spilling.

EP 1 524 525 A1 discloses a moving evaporation control cover for at least one fluid containing receptacle for use in a clinical analyzer that includes a pliable cover capable forming a sealing relationship with the fluid containing receptacle, wherein said cover moves with said receptacle; and one or more rollers in contact with the pliable cover.

US 2002/0009391 A1 discloses an integrated sample-processing system comprising a mechanism or system for sealing wells or other reservoirs in a mircoplate or other sample holder, wherein a rectangular sealing sheet is applied to a microplate top to cover the wells.

### SUMMARY OF THE INVENTION

It is an object of the present invention to provide a method and a device for an improved handling of test tubes in a laboratory automation system, in particular for an improved handling of open test tubes.

This object is solved by the method with the features claim 1 and the device with the features of claim 4.

According to a first aspect, a method for handling an open test tube in a laboratory automation system by means of a manipulator according to claim 1 is provided.

In the context of the application, the term "cover" is to be understood as meaning that the element abuts the open end of the test tube without combining the elements by means of a structural connection, adhesive or the like.

By means of the tape, the test tube is temporarily covered to prevent the sample from sloshing out of the test tube or spilling while moving the test tube. Covering the test tubes permits a handling of the test tubes at high velocities and/or high accelerations. Hence, in contrast to the prior art, it is not necessary to lower the speed of a manipulator handling the test tubes even in case of high fill levels within the test tubes. In contrast to a closing of the open end by means of a plug or other closing elements fitted into the opening at the open end, the flat cover element allows to temporarily cover the open end without the necessity of an additional decapping step after releasing the test tube. The tape is placed against the open end of the test tube upon picking up the test tube and removed from test tube upon releasing the test tube.

The tape is oriented with its flat surface abutting against the open end of the test tube. In preferred embodiments, the tape is stretched over the open end to sealingly cling to the contour of the open end. It is obvious to the person skilled in the art that the width of the tape is chosen to match the size of the open end of the test tube, wherein the width is chosen larger than the width of the open end so that the tape overlaps an outer edge of the test tube.

For securely forcing the tape against the open end, the tape is held under tension by forcing two sections of the tape extending at both sides past the open end of the test tube towards a lower end of the test tube. Upon picking up the test tubes, generally the test tubes are arranged in a vertical orientation. Hence, the sections of the tape next to the test tube are forced downwards. In one embodiment, the two sections of the tape extending at both sides past the open end are pulled downwards essentially in parallel to a longitudinal direction of the test tubes. Preferably, the two sections are pulled diagonally downwards.

The tape length required for covering one test tube is for example about 5 cm to 30 cm. In one embodiment, the tape is provided in the form of a strip having a short length of about 5 to 30 cm. A tape having a length, which is longer than the tape length required for covering one test tube is provided, which tape runs between a tape supply unit and a takeup unit. The tape is section-by-section withdrawn from the tape supply for covering successive test tubes. After releasing the test tube, the used section of the tape is drawn into the takeup unit. Preferably, several meters of tape are initially stored in the tape supply unit. The tape supply unit and the takeup unit in preferred embodiments each comprise a reel from which or to which the tape is wound. Preferably, the takeup unit is provided with a mechanism avoiding a withdrawal of used tape from the takeup unit. For example, a reel provided at the takeup unit is mounted unidirectional rotatable for avoiding unwinding of used tape.

In preferred embodiments, no section of a tape is reused for covering successive tubes. For this purpose, in preferred embodiments, the tape is forwarded from the tape supply unit to the takeup unit prior to covering the open ends of successive test tubes. Hence, a new section of the tape is used for each test tube avoiding that a potentially contaminated section of the tape comes in contact with the sample. The forwarding may be carried out either immediately prior to the handling of a particular test tube and/or after handling of a test tube in preparation of a handling of a subsequent test tube.

According to a second aspect of the invention, a device for handling an open test tube in a laboratory automation system by means of a manipulator with a retaining area for the test tube according to claim 4 is provided.

In the context of the invention, a manipulator refers to a robotic mechanism having a tool or work unit attached to its distal end. The manipulator for example is a pick-and-place manipulator having a gripper attached to its distal end. The device in preferred embodiments is attached to the manipulator, for example the pick-and-place manipulator, in particular to the tool, for example a gripper. Hence, covering the test tube is carried out upon handling the test tube by means of the manipulator. The device is used for example with a manipulator sorting open test tubes, wherein a position of a test tube within a rack is altered and/or wherein a test tube is moved from a first rack to a second rack and/or for moving test tubes between various stations, supply chains and other devices of the laboratory automation system.

In preferred embodiments, the tape is an aluminum tape, a copper tape and/or a plastic tape, for example a cling tape. The material of the tape is chosen suitably by the person skilled, avoiding any potential interaction with the sample and/or any residue that may result in a contamination of the sample. The tape in one example is provided with a coating, which is unreactive under expected conditions.

The device comprises a support plate attachable to the manipulator for arranging the tape in the retaining area. The support plate is mounted in one embodiment to a limb or arm of the manipulator. In other embodiments, the device is mounted to a tool of the manipulator, for example to a gripper. The support plate is designed to prevent a collision with the tool of the manipulator. In preferred embodiments, a fork-shaped support plate is provided having two tines extending in parallel at two sides of the tool.

In one embodiment, the tape is held by means of the support plate at a fixed position in the retaining area. Preferably, the device comprises a support plate for supporting the tape, which is moveable with respect to the Z-axis of the manipulator, in particular moveable relative to the tool of the manipulator. In the context of the application, the term Z-axis refers to the axis parallel to the tool axis, i.e. with a pick-and-place manipulator generally to the vertical axis. A movable support plate allows an adjustment of the position of the support plate to a height of the test tube. Preferably, the support plate is moveable over a distance to allow the tape to be moved out of the retaining area for example when handling a capped tube and/or in case of an unexpected disturbance. For this purpose, in some embodiments a driving device is assigned to the support plate for moving the support plate along the Z-axis.

Due to gravitational forces, the support plate is forced downwards. In preferred embodiments, the support plate is forced along the Z-axis towards a tool tip of the manipulator by means of a force element, in particular by means of at least one compression spring.

The device comprises a tape supply unit and a takeup unit, wherein the tape runs between the tape supply unit and the takeup unit. In preferred embodiments, the tape supply unit and the takeup unit are both provided with a reel.

In one embodiment, prior to covering the open end of the test tube, the tape is forwarded manually from the take supply unit to the takeup unit for removing a potentially contaminated section of the tape. In preferred embodiments, a driving device is assigned to the takeup unit for forwarding the tape from the tape supply unit to the takeup unit.

In preferred embodiments, the driving device is synchronized with the manipulator such that upon releasing a test tube the tape is forwarded for removing a potentially contaminated section of the tape. Hence, upon releasing one test tube, the tape is prepared for a subsequent test tube.

The manipulator in preferred embodiments comprises a gripper with at least two fingers extending in the direction of the Z-axis for picking-up and retaining the test tube, wherein the tape runs between the at least two fingers with a flat face of the tape prior to picking-up the test tube oriented at least essentially perpendicular to the Z-axis. This arrangement allows for a compact device while avoiding an undesired interference of the gripper and the tape. Upon approaching the test tubes, the open end comes into contact with the tape reaching across the retaining area and upon further movement of the gripper towards the test tubes, the tape sections adjacent to the open end are pushed downwards, thereby stretching the tape over the open end.

According to a third aspect, a laboratory automation system with a number of pre-analytical, analytical and/or post-analytical stations, and with means for carrying out an inventive method and/or with an inventive device is provided.

### BRIEF DESCRIPTION OF THE DRAWINGS

- Fig. 1:: Perspective view of an embodiment of a device for handling open test.
- Fig. 2:: Front view of the device of Fig. 1.
- Fig. 3:: Rear view of the device of Fig. 1.

### DETAILED DESCRIPTION

In the following, an embodiment of the invention will be described in detail with reference to the drawings. Wherever possible, the same reference numbers are used throughout the drawings to refer to the same or like parts.

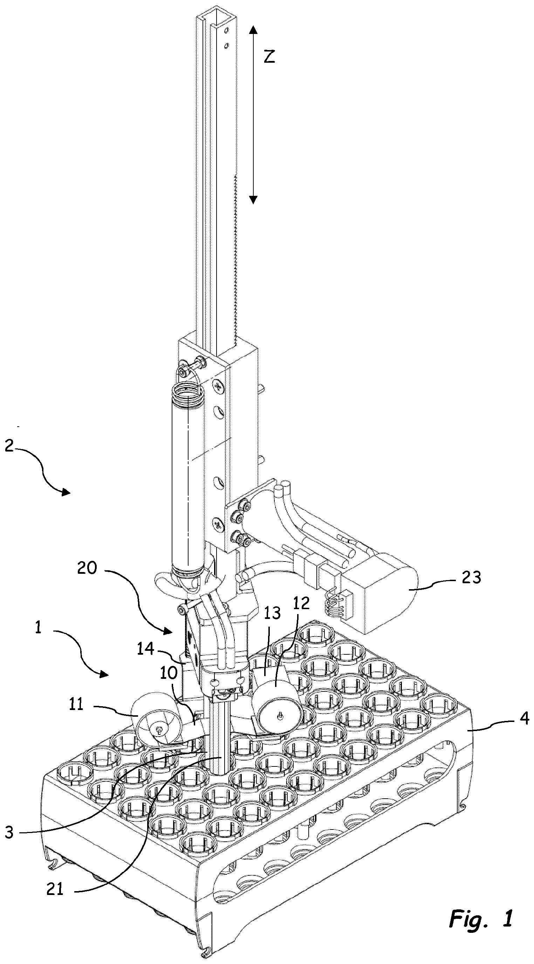

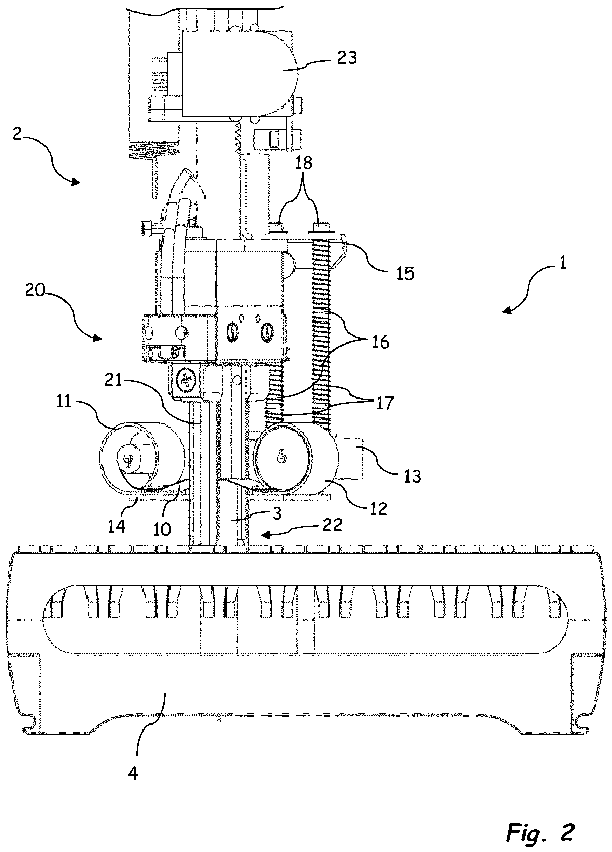

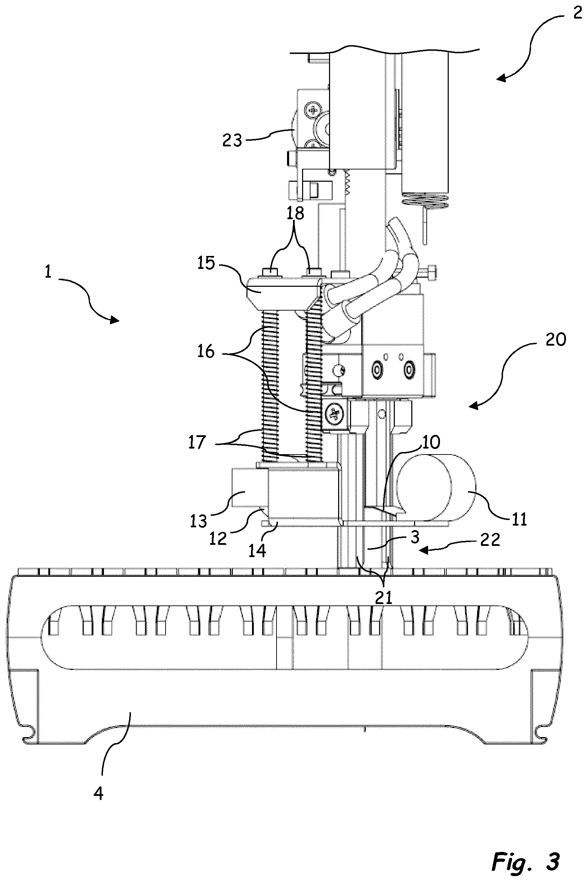

Fig. 1 to 3 show in schematic drawings an embodiment of a device 1 for handling open test tubes in a perspective view, a front view, and a rear view, respectively.

The device 1 is attached to a manipulator 2 for handling test tubes in a laboratory automation system. At least prior to being picked-up by the manipulator 2, in the embodiment shown the test tubes 3 are placed in a rack 4, wherein in the figures only one test tube 3 is shown. The manipulator 2 removes the tubes 3 from the rack 4, for example for sorting the test tubes, wherein a position of a test tube 3 within the rack 4 is altered and/or wherein a test tube 3 is moved from a first rack to a second rack. In alternative, the test tube 3 is taken from the rack 4 and moved to a different station with the laboratory automation system.

The manipulator 2 shown comprises a gripper 20 with two fingers 21 defining a retaining area 22 for the test tube 3. The gripper 20 is moveable along a Z-axis indicated with an arrow in figure 1 by means of a driving device 23 for picking-up the test tube 3 from the rack 4 and/or placing the test tube 3 in the rack 4. The fingers 21 are moveable in a movement direction perpendicular to the Z-axis.

The device 1 comprises a tape 10, which functions as a residue-free removable, flat cover element that can be forced against the non-visible open end of a test tube 3 retained in the retaining area 22. Preferably, the tape 10 is stretched over the open end of the test tube 3 to sealingly cling to the contour of the open end.

In the embodiment shown, the tape 10 runs between a tape supply unit 11 and a takeup unit 12 between the two fingers 21 with a flat face of the tape 10 oriented at least essentially perpendicular to the Z-axis, i.e. horizontally in the orientation shown in the figures. For gripping or releasing the test tubes 3, the fingers 21 of the gripper 20 move perpendicular to the Z-axis. The tape 10 is arranged crosswise, in particular perpendicular to said movement direction of the fingers 21. The tape supply unit 11 comprises a reel from which the tape 10 is wound. The takeup unit 12 comprises a reel to which the tape 10 is wound. A driving device 13 is assigned to the takeup unit 12. The reel of the takeup unit 12 is mounted unidirectional rotatable for avoiding unwinding of tape 10 from the reel of the takeup unit 12.

The device 1 further comprises a support plate 14 to which the tape supply unit 11 and a takeup unit 12 are mounted. The support plate 14 is attached to the manipulator 2 by means of a mounting plate 15, two bolts 16 extending in parallel to the Z-axis, and two compression springs 17 arranged coaxially to the bolts 16. The mounting plate 15 is arranged at a fixed position of the manipulator 2 with respect to the gripper 20. The mounting plate 15 is provided with two through holes for the two bolts 16, wherein the bolts 16 are inserted in the through holes moveable along their longitudinal axis. Stoppers 18 are provided for limiting the movement of the bolts 16. At the end opposite to the stoppers 18, the bolts 16 are fixedly coupled to the support plate 14. The compression springs 17 force the support plate 14 in the direction of the Z-axis away from the mounting plate 15 towards a tip of the gripper 20. The two bolts 16 allow a reliable guiding of the support plate 14 along the Z-axis. However, in other embodiments, only one bolt, for example a bolt having not a rotationally symmetric cross section, or more that two bolts 16 are provided.

In use, the driving device 13 can be activated for driving the reel of the takeup unit 12 so that the tape 10 is wound to the reel of the takeup unit 12. While driving the reel of the takeup unit 12 for winding the tape 10, the reel of the tape supply unit 11 is not blocked and tape 10 is unwound from the reel of the tape supply unit 11. After a new unused section of the tape 10 having a desired length is arranged in the retaining area 22, the reels of the tape supply unit 11 and the takeup unit 12 are both blocked for preventing an unwinding of the tape 10.

Next, the manipulator 2 can be driven to approach the test tube 3. At this stage, the support plate 14 preferably is arranged in a position with respect to the gripper 20 which is closer to a distal end of the gripper 20 than the open end of the test tube 3 will be after the gripper 20 has reached its final position for picking up the test tube 3 and the fingers 21 for gripping the test tube 3 are approaching each other. As a result, the support plate 14 is arranged below the open end of the test tube 3 arranging the tape 10 in an area at which the test tube 3 is received. Hence, the open end of the test tube 3 contacts the tape 10 when the manipulator 2 approaches the test tube 3. Due to the contact of the open end of the test tube 3 and the tape 10, a force is exerted on the tape 10 forcing the tape 10 in the direction of the Z-axis out of the retaining area 22 towards the mounting plate 15. The force is counteracted by the compression springs 17. In result, two sections of the tape 10 extending at both sides past the open end of the test tube 3 are forced diagonally towards a lower end of the test tube 3. Thereby, the tape 10 is stretched and forced under tension against the open end of the test tube 3. Hence, by means of the tape 10, the test tube 3 is sealingly covered and the tape 10 prevents a sample in the test tube 3 from sloshing out of the test tube 3 or spilling when moving the test tube by means of the manipulator 2. The tape 10 clinging to the open end permits a handling of the covered test tube 3 at high velocities and/or at high accelerations. Hence, in contrast to prior art devices, it is not necessary to lower the speed of the manipulator 2 even in case of a high fill level.

After or upon releasing the test tube 3 by opening the fingers 21 of the gripper 20 and moving the gripper 20 away from the test tube 3 along the Z-axis, the driving device 13 assigned to the takeup unit 11 is activated for forwarding the tape 10 from the tape supply unit 11 to the takeup unit 12. Thereby, a potentially contaminated section of the tape 10 is removed and a clean section of the tape 10 is provided between the tape supply unit 11 and the takeup unit 12. Thereafter, the manipulator 2 may be driven to pick-up a further test tube, the open end of which will be covered by the clean section of the tape 10.

In preferred embodiments, an additional driving device is assigned to the device 1 for moving the support plate 14 with the tape 10 towards the mounting plate 15. This allows an automated adjustment of the position of the support plate 14 along the Z-axis to a height of a test tube. Further, the additional driving device allows for an active movement of the support plate 14 out of the retaining area 22 for avoiding collision and/or when picking up a capped test tube.

## Claims

1. Method for handling an open test tube (3) in a laboratory automation system by means of a manipulator, wherein during the handling an open end of the test tube (3) is covered by a residue-free removable tape (10), **characterized in that**
- the tape is placed against the open end of the test tube upon picking up the test tube with the manipulator,
- during the handling by means of the manipulator the tape (10) is forced against the open end of the test tube (3) and held under tension by forcing two sections of the tape (10) extending at both sides past the open end of the test tube (3) towards a lower end of the test tube (3), and
- the tape is removed from the test tube upon releasing of the test tube.

2. Method according to claim 1, **characterized in that** the tape (10) runs between a tape supply unit (11) and a takeup unit (12).

3. Method according to claim 2, **characterized in that** the tape (10) is forwarded from the tape supply unit (11) to the takeup unit (12) prior to covering the open end of the test tube.

4. Device for handling an open test tube (3) in a laboratory automation system by means of a manipulator (2) with a retaining area (22) for the test tube (3),
the device (1) comprising:
- a residue-free removable tape (10) arranged for being forced against the open end of a test tube (3) retained in the retaining area (22) of the manipulator (2),
- a support plate (14) attachable to the manipulator (2) for arranging the tape (10) in the retaining area (22) of the manipulator (2), such that the tape is placed against the open end of the test tube upon picking up the test tube with the manipulator and removed from the test tube upon releasing of the test tube (3),
- a tape supply unit (11) and a takeup unit (12) mounted to the support plate (14), wherein the tape (10) runs between the tape supply unit (11) and the takeup unit (12).

5. Device according to claim 4, **characterized in that** the tape (10) is an aluminum tape, a copper tape and/or a plastic tape, for example a cling tape.

6. Device according to claim 4 or 5, **characterized in that** the support plate (14) is a fork-shaped support plate (14).

7. Device according to claim 4, 5 or 6, **characterized in that** the support plate (14) is moveable with respect to the Z-axis of the manipulator (2).

8. Device according to claim 7, **characterized in that** the support plate (14) is forced along the Z-axis towards a tool tip of the manipulator (2) by means of a force element, in particular by means of at least one compression spring (17).

9. Device according to any one of claims 4 to 8, **characterized in that** a driving device (13) is assigned to the takeup unit (12) for forwarding the tape (10) from the tape supply unit (11) to the takeup unit (12) prior to covering the open end of the test tube (3).

10. Device according to claim 9, **characterized in that** the driving device (13) is synchronized with the manipulator (2) such that upon or after releasing a test tube (3) the tape (10) is forwarded for removing a potentially contaminated section of the tape (10).

11. Device according to any one of claims 4 to 10, **characterized in that** the manipulator (2) comprises a gripper (20) with at least two fingers (21) extending in the direction of the Z-axis for picking-up and retaining the test tube (3), wherein the tape (10) runs between the at least two fingers (21) with a flat face of the tape (10) prior to picking-up the test tube (3) oriented at least essentially perpendicular to the Z-axis.

12. Laboratory automation system with a number of pre-analytical, analytical and/or post-analytical stations, and with means for carrying out a method according to any of claims 1 to 3 and/or with a device according to any one of claims 4 to 10.

## Patentansprüche

1. Verfahren zur Handhabung eines offenen Probenröhrchens (3) in einem Laborautomatisierungssystem mit Hilfe eines Manipulators, wobei bei der Handhabung ein offenes Ende des Probenröhrchens (3) mit einem rückstandsfrei entfernbaren Streifen (10) abgedeckt ist, **dadurch gekennzeichnet, dass**
- der Streifen gegen das offene Ende des Probenröhrchens angelegt wird, wenn das Probenröhrchen mit dem Manipulator aufgegriffen ist,
- bei der Handhabung mit Hilfe des Manipulators der Streifen (10) gegen das offene Ende des Probenröhrchens (3) gezwungen und unter Spannung gehalten wird, indem zwei Abschnitte des Streifens (10), die sich zu beiden Seiten erstrecken, über das offene Ende des Probenröhrchens (3) zu einem unteren Ende des Probenröhrchens (3) gezwungen werden, und
- der Streifen vom Probenröhrchen entfernt wird, wenn das Probenröhrchen freigegeben ist.

2. Verfahren nach Anspruch 1, **dadurch gekennzeichnet, dass** der Streifen (10) zwischen einer Streifen-Zuführeinheit (11) und einer -Aufnahmeeinheit (12) verläuft.

3. Verfahren nach Anspruch 2, **dadurch gekennzeichnet, dass** der Streifen (10) von der Streifen-Zuführeinheit (11) zur -Aufnahmeeinheit (12) weitergeleitet wird, bevor das offene Ende des Probenröhrchens abgedeckt wird.

4. Vorrichtung zur Handhabung eines offenen Probenröhrchens (3) in einem Laborautomatisierungssystem mit Hilfe eines Manipulators (2) mit einem Haltebereich (22) für das Probenröhrchen (3),
wobei die Vorrichtung (1) umfasst:
- einen rückstandsfrei entfernbaren Streifen (10), der dazu ausgebildet ist, dass er gegen das offene Ende eines Probenröhrchens (3) gezwungen wird, das im Haltebereich (22) des Manipulators (2) gehalten ist,
- eine Auflageplatte (14), die am Manipulator (2) anbringbar ausgebildet ist, zum Anordnen des Streifens (10) im Haltebereich (22) des Manipulators (2) derart, dass der Streifen gegen das offene Ende des Probenröhrchens gezwungen wird, wenn das Probenröhrchen mit dem Manipulator aufgegriffen ist, und vom Probenröhrchen entfernt wird, wenn das Probenröhrchen (3) freigegeben ist,
- eine Streifen-Zuführeinheit (11) und eine Streifen-Aufnahmeeinheit (12), die auf der Auflageplatte (14) angebracht sind, wobei der Streifen (10) zwischen der Streifen-Zuführeinheit (11) und der -Aufnahmeeinheit (12) verläuft.

5. Vorrichtung nach Anspruch 4, **dadurch gekennzeichnet, dass** der Streifen (10) als Aluminiumstreifen, Kupferstreifen und/oder Kunststoffstreifen, zum Beispiel als Haftstreifen, ausgebildet ist.

6. Vorrichtung nach Anspruch 4 oder 5, **dadurch gekennzeichnet, dass** die Auflageplatte (14) als gabelförmige Auflageplatte (14) ausgebildet ist.

7. Vorrichtung nach Anspruch 4, 5 oder 6, **dadurch gekennzeichnet, dass** die Auflageplatte (14) in Bezug auf die Z-Achse des Manipulators (2) bewegbar ist.

8. Vorrichtung nach Anspruch 7, **dadurch gekennzeichnet, dass** die Auflageplatte (14) mittels eines Kraftelements, insbesondere mittels mindestens einer Kompressionsfeder (17), entlang der Z-Achse zu einer Werkzeugspitze des Manipulators (2) getrieben wird.

9. Vorrichtung nach einem der Ansprüche 4 bis 8, **dadurch gekennzeichnet, dass** der Aufnahmeeinheit (12) eine Antriebseinrichtung (13) zugeordnet ist zum Weiterleiten des Streifens (10) von der Streifen-Zuführeinheit (11) zur -Aufnahmeeinheit (12), bevor das offene Ende des Probenröhrchens abgedeckt wird.

10. Vorrichtung nach Anspruch 9, **dadurch gekennzeichnet, dass** die Antriebseinrichtung (13) mit dem Manipulator (2) derart synchronisiert ist, dass beim oder nach dem Freigeben eines Probenröhrchens (3) der Streifen (10) weitergeleitet wird, um einen potentiell verunreinigten Abschnitt des Streifens (10) zu entfernen.

11. Vorrichtung nach einem der Ansprüche 4 bis 10, **dadurch gekennzeichnet, dass** der Manipulator (2) einen Greifer (20) mit mindestens zwei Fingern (21), die sich in Richtung der Z-Achse erstrecken, zum Aufgreifen und Halten des Probenröhrchens (3) aufweist, wobei der Streifen (10) zwischen den mindestens zwei Fingern (21) verläuft, wobei eine flache Seite des Streifens (10) vor dem Aufgreifen des Probenröhrchens (3) mindestens im Wesentlichen senkrecht zur Z-Achse orientiert ist.

12. Laborautomatisierungssystem mit einer Anzahl an präanalytischen, analytischen und/oder postanalytischen Stationen, und mit Mitteln zum Ausführen eines Verfahrens nach einem der Ansprüche 1 bis 3 und/oder mit einer Vorrichtung nach einem der Ansprüche 4 bis 10.

## Revendications

1. Procédé de manipulation d'un tube à essai ouvert (3) dans un système d'automatisation de laboratoire au moyen d'un manipulateur, dans lequel, pendant la manipulation, une extrémité ouverte du tube à essai (3) est recouverte par un ruban amovible dépourvu de résidus (10), **caractérisé en ce que**
- le ruban est placé contre l'extrémité ouverte du tube à essai lors de la saisie du tube à essai avec le manipulateur,
- pendant la manipulation au moyen du manipulateur, le ruban (10) est poussé contre l'extrémité ouverte du tube à essai (3) et maintenu sous tension en poussant deux sections du ruban (10) s'étendant des deux côtés au-delà de l'extrémité ouverte du tube à essai (3) vers une extrémité inférieure du tube à essai (3), et
- le ruban est retiré du tube à essai lors de la libération du tube à essai.

2. Procédé selon la revendication 1, **caractérisé en ce que** le ruban (10) court entre une unité de fourniture de ruban (11) et une unité de réception (12) .

3. Procédé selon la revendication 2, **caractérisé en ce que** le ruban (10) est avancé de l'unité de fourniture de ruban (11) à l'unité de réception (12) avant de recouvrir l'extrémité ouverte du tube à essai.

4. Dispositif de manipulation d'un tube à essai ouvert (3) dans un système d'automatisation de laboratoire au moyen d'un manipulateur (2) avec une zone de retenue (22) pour le tube à essai (3), le dispositif (1) comprenant :
- un ruban amovible dépourvu de résidus (10) agencé pour être poussé contre l'extrémité ouverte d'un tube à essai (3) retenu dans la zone de retenue (22) du manipulateur (2),
- une plaque de support (14) attachable au manipulateur (2) pour disposer le ruban (10) dans la zone de retenue (22) du manipulateur (2), de telle sorte que le ruban est placé contre l'extrémité ouverte du tube à essai lors de la saisie du tube à essai avec le manipulateur et retiré du tube à essai lors de la libération du tube à essai (3),
- une unité de fourniture de ruban (11) et une unité de réception (12) montées sur la plaque de support (14), le ruban (10) courant entre l'unité de fourniture de ruban (11) et l'unité de réception (12).

5. Dispositif selon la revendication 4, **caractérisé en ce que** le ruban (10) est un ruban d'aluminium, un ruban de cuivre et/ou un ruban de plastique, par exemple un ruban étirable.

6. Dispositif selon la revendication 4 ou 5, **caractérisé en ce que** la plaque de support (14) est une plaque de support en forme de fourche (14).

7. Dispositif selon la revendication 4, 5 ou 6, **caractérisé en ce que** la plaque de support (14) est mobile par rapport à l'axe Z du manipulateur (2).

8. Dispositif selon la revendication 7, **caractérisé en ce que** la plaque de support (14) est poussée le long de l'axe Z vers une pointe d'outil du manipulateur (2) au moyen d'un élément exerçant une force, en particulier au moyen d'au moins un ressort de compression (17).

9. Dispositif selon l'une quelconque des revendications 4 à 8, **caractérisé en ce qu'**un dispositif d'entraînement (13) est affecté à l'unité de réception (12) pour faire avancer le ruban (10) de l'unité de fourniture de ruban (11) à l'unité de réception (12) avant de recouvrir l'extrémité ouverte du tube à essai (3).

10. Dispositif selon la revendication 9, **caractérisé en ce que** le dispositif d'entraînement (13) est synchronisé avec le manipulateur (2) de telle sorte que, lors de ou après la libération d'un tube à essai (3), le ruban (10) est avancé pour retirer une section potentiellement contaminée du ruban (10).

11. Dispositif selon l'une quelconque des revendications 4 à 10, **caractérisé en ce que** le manipulateur (2) comprend une pince (20) avec au moins deux doigts (21) s'étendant dans la direction de l'axe Z pour saisir et retenir le tube à essai (3), le ruban (10) courant entre les au moins deux doigts (21) avec une face plate du ruban (10) avant la saisie du tube à essai (3) orienté au moins essentiellement perpendiculairement à l'axe Z.

12. Système d'automatisation de laboratoire avec un nombre de postes pré-analytiques, analytiques et/ou post-analytiques, et avec des moyens pour réaliser un procédé selon l'une quelconque des revendications 1 à 3 et/ou avec un dispositif selon l'une quelconque des revendications 4 à 10.
